# EUROPÄISCHE PATENTSCHRIFT

(11) **EP 2 603 129 B1**
(45) Veröffentlichungstag und Bekanntmachung des Hinweises auf die Patenterteilung: **14.05.2014**
(21) Anmeldenummer: 11734115.6
(22) Anmeldetag: 21.07.2011
(51) Int. Cl.: A47L 9/24, F16L 25/00

(54) **ANSCHLUSSSTUTZEN FÜR EINEN STAUBSAUGER**
CONNECTING PIPE FOR SUCTION CLEANER
TUBULURE DE CONNEXION POUR ASPIRATEUR

(30) Priorität: 12.08.2010 DE 102010039285
(43) Veröffentlichungstag der Anmeldung: 19.06.2013
(73) Patentinhaber: BSH Bosch und Siemens Hausgeräte GmbH, 81739 München (DE)
(72) Erfinder: HAMM, Silvio, 98617 Sülzfeld (DE); WEIGAND, Artur, 97618 Niederlauer (DE)
(86) Internationale Anmeldenummer: PCT/EP2011/062510
(87) Internationale Veröffentlichungsnummer: WO 2012/019894

(56) Entgegenhaltungen:
- EP-A1- 1 344 483
- WO-A1-2005/009194
- DE-A1- 4 240 913
- DE-A1-102004 038 630

## Beschreibung

### Gebiet der Erfindung

Die vorliegende Erfindung betrifft einen Anschlussstutzen für einen Staubsauger, wobei der Anschlussstutzen mit einer Saugöffnung eines Staubsaugerteils und einem Saugschlauch verbindbar ist, und an dem Anschlussstutzen ein Rastelement angeordnet ist, das in eine Verriegelungsstellung, in welcher der Anschlussstutzen durch das Rastelement an der Saugöffnung fixierbar ist, und in eine Entriegelungsstellung, in welcher der Anschlussstutzen von der Saugöffnung lösbar ist, gebracht werden kann, und das Rastelement so an dem Anschlussstutzen angeordnet ist, dass es den Saugschlauch in der Entriegelungsstellung verformen kann.

### Hintergrund der Erfindung

Das deutsche Gebrauchsmuster DE 9214223 U1 offenbart eine Kupplung zum Verbinden eines Staubsaugerschlauches mit einem Anschlussteil, das eine umlaufende Innennut aufweist. Als Verbindungsglied zwischen dem Schlauch und dem Anschlussteil dient eine Hülse, in die der Schlauch eingesteckt und dort befestigt ist. Im Mantel der Hülse ist durch Axialschlitze ein auslenkbares Verriegelungselement, das die Form einer Zunge hat, gebildet. Das Verriegelungselement ist gegen eine eigene Federkraft auslenkbar. Auf ihrem Rücken weist das Verriegelungselement einen Rastnocken auf, der beim Einschieben der Hülse in das Anschlussteil vom Anschlussteil auslenkbar und zum Rasteingriff in die Innennut des Anschlussteils ausgebildet ist. Das Verriegelungselement kann zum Ausrasten des Rastnockens ausgelenkt werden.

Aus der deutschen Offenlegungsschrift DE 4240913 A1 ist ein Staubsaugerschlauch mit einem Kupplungselement zum lösbaren Anschluss an ein hohles Anschlussteil bekannt. An einem kuppelbaren Ende des Staubsaugerschlauches ist eine Schlauchhülse angeordnet, die fest mit dem Staubsaugerschlauch verbunden ist. An der Schlauchhülse sind einzelne Rastzungen mit ihrem einen Ende über ein Filmscharnier angeformt. Hierdurch sind die Rastzungen gegenüber der Schlauchhülse beweglich. An den Rastzungen ist jeweils eine nach radial außen ragende Rastnocke angeformt, die in eine Rastnut des Anschlussteils eingreift. Zum Lösen der Rastnocken aus der Rastverbindung mit der Rastnut werden die Rastzungen an ihrer Grifffläche niedergedrückt. Ein solches Niederdrücken ist aufgrund der Elastizität des Staubsaugerschlauches möglich, da sich dieser entsprechend verformen lässt.

In der europäischen Patentschrift EP 0803225 B1 ist eine Anordnung zum lösbaren Verbinden eines Saugstutzens beschrieben. Durch ein Verriegelungselement der Anordnung ist der Saugstutzen lösbar mit der Saugöffnung gekoppelt. Das Verriegelungselement weist einen Ringteil auf, an dem zwei radial nach außen vorstehende Rastnocken angeformt sind, die einen an einem Wandteil der Saugöffnung des Staubsaugers angeformten Rastvorsprung untergreifen, sodass der Saugstutzen am Staubsaugergehäuse in der Saugöffnung gehalten wird.

Die deutsche Offenlegungsschrift DE 10 2004 038 630 A1, welche dem Oberbegriff des unabhängigen Anspruchs 1 entspricht, offenbart eine Kupplung mit einem ersten rohrförmigen Kupplungselement, das eine Rastnut aufweist und einem zweiten rohrförmigen Kupplungselement, das zwei gegenüberliegende Rastnasen aufweist, die im gekoppelten Zustand der Kupplung in die Rastnut eingreifen. Eine beim Koppeln der Kupplungselemente dem zweiten Kupplungselement zugewandte Nutflanke weist zwei gegenüberliegende Abschnitte auf, die aufgrund von U-förmigen Unterbrechungen und hierdurch entstehenden Zungen elastisch nach innen bewegbar sind. Eine Entkopplung wird unterbunden, wenn die relative Drehposition vom ersten Kupplungselement und zweiten Kupplungselement so gewählt ist, dass die Rastnasen die nach innen bewegbaren Abschnitte der Nutflanke der Rastnut nicht vollständig überlappen.

### Der Erfindung zugrundeliegende Aufgabe

Der Erfindung liegt die Aufgabe zugrunde, einen gegenüber dem Stand der Technik verbesserten Anschlussstutzen für einen Staubsauger bereitzustellen. Insbesondere soll ein Anschlussstutzen bereitgestellt werden können, der zuverlässiger in einer Saugöffnung eines Staubsaugerteils fixiert werden kann.

### Erfindungsgemäße Lösung

Die Bezugszeichen in sämtlichen Ansprüchen haben keine einschränkende Wirkung, sondern sollen lediglich deren Lesbarkeit verbessern.

Die Lösung der gestellten Aufgabe gelingt durch einen Schlauchstutzen mit den Merkmalen des Anspruchs 1.

Durch einen Anschlussstutzen kann eine Verbindung für einen Saugluftstrom zwischen einer Saugöffnung eines Staubsaugerteils und einem Saugschlauch hergestellt werden. Hierzu kann der Saugschlauch z.B. mit dem Anschlussstutzen durch Kleben, Stecken oder Schweißen verbunden werden. Um eine lösbare Verbindung zwischen dem Saugschlauch und dem Staubsaugerteil zu ermöglichen, kann der Anschlussstutzen mit der Saugöffnung eines Staubsaugerteils verbunden werden, in welcher er durch das Rastelement in der Verriegelungsstellung fixierbar ist. Das Staubsaugerteil kann z.B. das Gehäuse des Staubsaugers sein, bei dem der Saugluftstrom durch die Saugöffnung zu einer Staubabscheideeinheit geführt werden kann. Das Staubsaugerteil kann aber auch ein Handgriff, ein Saugrohr oder eine Düse sein. Üblicherweise weist ein Anschlussstutzen zwei Öffnungen auf, damit die innerhalb des Saugschlauchs strömende Saugluft, wenn der Anschlussstutzen mit dem Staubsaugerteil verbunden ist, von dem Saugschlauch zu der Saugöffnung strömen kann. Durch eine dieser Öffnungen kann z.B. der Saugschlauch in den Anschlussstutzen eingesteckt werden, um mit dem Anschlussstutzen verbunden zu werden. Die andere Öffnung kann mit der Saugöffnung korrespondieren.

Das Rastelement ist in die Entriegelungsstellung und in die Verriegelungsstellung bringbar, kann also relativ zu dem Anschlussstutzen bewegt werden, um die lösbare Verbindung zwischen dem Saugschlauch und dem Staubsaugerteil zu ermöglichen. Zwischen der Verriegelungsstellung und der Entriegelungsstellung kann das Rastelement natürlich weitere Zwischenstellungen einnehmen, in welchen der Anschlussstutzen ebenfalls durch das Rastelement in der Saugöffnung fixiert wird.

Dadurch, dass der Saugschlauch in der Entriegelungsstellung durch das Rastelement elastisch verformt werden kann, kann der Saugschlauch eine Rückstellkraft auf das Rastelement ausüben, durch die das Rastelement von der Entriegelungsstellung in die Verriegelungsstellung gebracht werden kann. Ein üblicher Saugschlauch ist nämlich elastisch verformbar und kann deswegen, nachdem er verformt wurde, wieder in seine ursprüngliche Form zurückkehren, wobei er die Rückstellkraft auf das Rastelement ausüben kann. Diese Rückstellkraft kann eine sichere Fixierung des Anschlussstutzens an der Saugöffnung ermöglichen, da die Rückstellkraft vorteilhafterweise zumindest dann auf das Rastelement einwirkt, wenn dieses von der Verriegelungsstellung zu der Entriegelungsstellung ausgelenkt wurde. Mit anderen Worten, durch die Rückstellkraft des Saugschlauchs kann vorteilhafterweise erreicht werden, dass sich das Rastelement ohne Einwirkung von äußeren Kräften oder bei einer der Rückstellkraft entgegenwirkenden resultierenden Kraft, die geringer als die Rückstellkraft ist, in der Verriegelungsstellung befindet und den Anschlussstutzen in der Saugöffnung sichert.

Die Erfinder haben erkannt, dass durch einen verformbaren Saugschlauch die Rückfedereigenschaften des Rastelements in die Verriegelungsstellung unterstützt oder sogar vollständig übernommen werden können, um das Rastelement zu entlasten und so eine höhere Lebensdauer zu erzielen. Ein Rastelement mit einer höheren Lebensdauer kann den Anschlussstutzen vorteilhafterweise zuverlässiger an der Saugöffnung fixieren. Außerdem haben die Erfinder erkannt, dass der Anschlussstutzen durch einen verformbaren Saugschlauch noch sicherer an der Saugöffnung des Staubsaugerteils fixiert werden kann, da die Rückstellfunktion des Rastelements von dem Saugschlauch zumindest zu einem Teil übernommen und somit von der Fixierfunktion des Rastelements getrennt werden kann. Ein weiterer Vorteil des erfindungsgemäßen Rastelements, das durch den Saugschlauch in die Verriegelungsstellung bringbar ist, kann eine vereinfachte Konstruktion des Anschlussstutzens sein, da der Saugschlauch die Funktion eines Rückstellelements übernehme kann und dadurch die Zahl der Bauteile des Anschlussstutzens reduziert werden kann.

Ein Ausweichfenster im Sinne der vorliegenden Erfindung hat einen durchgehenden Umfangsrand, durch den die Fläche des Ausweichfensters bestimmt wird. Die Fläche des Ausweichfensters kann also von dem Anschlussstutzen begrenzt werden. Das bedeutet, dass sich der Anschlussstutzen über das Ausweichfenster hinaus erstreckt, also nicht mit dem Ausweichfenster endet. Das Ausweichfenster kann sich auch von den Öffnungen des Anschlussstutzens, die von dem Saugluftstrom durchströmbar sind, darin unterscheiden, dass der Umfang des Ausweichfensters außerhalb des Saugluftstroms verläuft und der Saugluftstrom das Ausweichfenster somit nicht durchströmt. Der Umfang des Ausweichfensters kann nämlich, damit der Saugschlauch durch das Ausweichfenster ausweichen kann, auf der Oberfläche des Saugschlauchs oder zu dieser beabstandet verlaufen.

Die Erfindung nutzt aus, dass sich der Anschlussstutzen über das Ausweichfenster hinaus erstreckt und dadurch der Saugschlauch über das Ausweichfenster hinaus stabilisiert werden kann, um ein Abknicken oder Ausweichen des Saugschlauchs im Bereich des Ausweichfensters vermeiden zu können. Der Saugschlauch kann also sicherer in dem Bereich des Ausweichfensters durch den Anschlussstutzen geführt werden, so dass jederzeit sichergestellt werden kann, dass der Saugschlauch in der Entriegelungsstellung durch das Rastelement verformt ist und eine Rückstellkraft ausübt. Deswegen kann der Saugschlauch sicherstellen, dass sich das Rastelement in der Verriegelungsstellung befindet und sich nicht ungewollt in die Entriegelungsstellung bewegt. Hierdurch kann ein ungewolltes Lösen des Anschlussstutzens verhindert werden, was zu einer zuverlässigeren Fixierung des Saugschlauchs an der Saugöffnung führen kann.

Ein weiterer erreichbarer Vorteil des Ausweichfensters kann eine höhere Lebensdauer des Saugschlauchs sein. Der Saugschlauch kann nämlich durch das Ausweichfenster ausweichen, wenn er durch das Rastelement in der Entriegelungsstellung verformt wird. Hierdurch wird der Saugschlauch weniger stark elastisch verformt und damit weniger beansprucht, so dass dieser länger haltbar sein kann. Außerdem ist erreichbar, dass aufgrund der geringeren elastischen Verformung des Saugschlauchs weniger Kraft aufgewendet werden muss, um das Rastelement von der Verriegelungsstellung in die Entriegelungsstellung zu bringen. Dies kann eine angenehmere Bedienung des Anschlussstutzens und/oder die Nutzung eines handelsüblichen Saugschlauchs ermöglichen. Der Saugschlauch muss nämlich nicht etwa an der Stelle, an der er verformt werden soll, besonders leicht verformbar ausgestaltet werden. Weiter kann ein Anschlussstutzen mit dem erfindungsgemäßen Ausweichfenster leicht hergestellt werden.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

In einer bevorzugten Ausführung der Erfindung überlappen sich Rastelement und Ausweichfenster in axialer Richtung des Anschlussstutzens zumindest teilweise. Die axiale Richtung des Anschlussstutzens kann die Richtung der Längserstreckung des Ansaugstutzens sein. Üblicherweise wird der Anschlussstutzen im bestimmungsgemäßen Betrieb in axialer Richtung von dem Saugluftstrom durchströmt. Im bestimmungsgemäßen Betrieb ist der Saugschlauch an dem Anschlussstutzen angebracht und der Anschlussstutzen ist an die Saugöffnung angeschlossen. Besonders vorzugsweise beginnt oder endet das Ausweichfenster mit dem Rastelement in axialer Richtung. Das Rastelement kann sich auch in axialer Richtung über die gesamte Länge des Ausweichfensters erstrecken, also sich auf der gleichen Höhe befinden. Ein Rastelement und ein Ausweichfenster, die sich zumindest teilweise überlappen oder sogar sich auf gleicher Höhe befinden, können ein verbessertes Ausweichen des Saugschlauchs in der Entriegelungsstellung des Rastelements ermöglichen.

In einer weiteren bevorzugten Ausführungsform entspricht die maximale Erstreckung des Ausweichfensters in axialer Richtung der maximalen Erstreckung des Rastelements in axialer Richtung. Die axiale Erstreckung des Ausweichfensters kann hierbei zwischen 90 % und 110 % der axialen Erstreckung des Rastelements betragen. Die Erstreckung des Ausweichfensters und die des Rastelements kann auch als Längserstreckung bezeichnet werden. Dadurch, dass die maximale Erstreckung des Ausweichfensters der des Rastelements entspricht, kann ein optimales Ausweichen des Saugschlauchs erreicht werden, da dieser vorwiegend über die Länge des Rastelements verformt wird. Außerdem kann das Ausweichfenster dadurch eine optimale Größe aufweisen, die ein Ausweichen des Saugschlauchs und zugleich einen stabilen Anschlussstutzen ermöglichen kann. Natürlich sind auch Ausführungen der Erfindung denkbar, bei denen die axiale Erstreckung des Ausweichfensters die axiale Erstreckung des Rastelements übersteigt.

Die Erfindung weiterbildend ist vorzugsweise vorgesehen, dass das Ausweichfenster an einer Mantelwand des Anschlussstutzens angeordnet ist. Die Mantelwand ist hierbei der Teil des Anschlussstutzens, der den an dem Anschlussstutzen angebrachten Saugschlauch umschließt. Bei einem Anschlussstutzen, der den Saugschlauch umschließt, kann der Saugschlauch in der Entriegelungsstellung nach innen verformt werden und eine Rückstellkraft auf das Rastelement ausüben, die radial nach außen gerichtet ist. Besonders vorzugsweise ist das Rastelement an der Mantelwand angeordnet. Das Rastelement kann dabei so an dem Anschlussstutzen angeordnet sein, dass zumindest ein Teil des Rastelements von der Verriegelungsstellung radial nach innen bewegt werden kann, um das Rastelement in die Entriegelungsstellung zu bringen. Der Saugschlauch kann mit dem Anschlussstutzen verbunden werden, indem er bis zu einem Anschlag in den Anschlussstutzen eingeführt wird, um in dieser montierten Lage z.B. durch eine Klebe- oder Streckverbindung in dem Anschlussstutzen gehalten zu werden. Wird der Saugschlauch nun durch eine Mantelwand, an der sich das Ausweichfenster befindet, umschlossen, kann der Saugschlauch durch das Ausweichfenster nach außen ausweichen, so dass ihm vorteilhafterweise beliebig Volumen zum Ausweichen zur Verfügung stehen kann. Eine solche Konstruktion kann also platzsparend ausgeführt sein und dennoch beliebig Volumen für ein Ausweichen des Saugschlauchs zur Verfügung stellen.

Bei einer bevorzugten Ausführungsvariante des Anschlussstutzens ist der Anschlussstutzen zumindest teilweise zylinderförmig ausgebildet. Besonders vorzugsweise ist der Anschlussstutzen zumindest teilweise rohrförmig ausgebildet. Der Teil des Anschlussstutzens, der rohrförmig ausgebildet ist, kann auch als Rohrabschnitt bezeichnet werden. Ein zumindest teilweise zylinderförmig oder rohrförmig ausgebildeter Anschlussstutzen kann leicht durch herkömmliche Herstellungsverfahren, wie z.B. durch Spritzgussverfahren, hergestellt werden. Besonders vorzugsweise sind das Rastelement und/oder das Ausweichfenster an dem Teil des Anschlussstutzens angeordnet, der zylinderförmig oder rohrförmig ausgebildet ist.

In einer Ausführung der Erfindung grenzt ein Teil des Rands des Ausweichfensters an das Rastelement an. In dieser Ausführung können das Ausweichfenster und das Rastelement z.B. durch einen Steg voneinander getrennt sein. Die Breite des Stegs, also der Abstand des Rands des Ausweichfensters von dem Rastelement ist hierbei besonders vorzugsweise geringer als die Erstreckung des Stegs entlang des Ausweichfensters und/oder des Rastelements.

Erfindungsgemäß ist vorzugsweise vorgesehen, dass das Rastelement über ein Gelenk mit dem Anschlussstutzen verbunden ist. Durch das Gelenk kann die Bewegung des Rastelements von der Verriegelungsstellung zu der Entriegelungsstellung bestimmt werden. Das Rastelement kann aber auch verformt werden, um in die Entriegelungsstellung und die Verriegelungsstellung gebracht zu werden. Natürlich kann das Rastelement erfindungsgemäß über ein Gelenk verbunden und zugleich elastisch verformbar sein, um in die Entriegelungsstellung und die Verriegelungsstellung gebracht zu werden.

In einer bevorzugten Ausführung der Erfindung ist das Rastelement einstückig an dem Anschlussstutzen angeformt. "Einstückig angeformt" meint, dass das Rastelement und der Anschlussstutzen aus einem einheitlichen Material gefertigt sind und ein gemeinsames Bauteil bilden. Das Rastelement und der Anschlussstutzen sind also aus einem Stück. Vorteilhafterweise kann der Anschlussstutzen hierdurch in einem Herstellungsschritt einfacher und schneller hergestellt werden. Das Rastelement muss nämlich nicht etwa in einem zweiten Herstellungsschritt an dem Anschlussstutzen angebracht werden. Außerdem ist erreichbar, dass zur Herstellung nur ein Material benötigt wird, so dass die Materialkosten gesenkt werden können. Das einstückig an den Anschlussstutzen angeformte Rastelement kann z.B. über ein als Filmscharnier ausgebildetes Gelenk mit dem Anschlussstutzen verbunden sein.

Die Erfindung weiterbildend ist vorzugsweise vorgesehen, dass das Rastelement zungenförmig ausgebildet ist. Das zungenförmige Rastelement, das auch als Rastlasche bezeichnet werden kann, ist über seine Zungenwurzel an dem Anschlussstutzen angeordnet, wobei das Zungenende relativ zu dem ersten Stutzenteil bewegbar ist. Um das Rastelement von der Verriegelungsstellung in die Entriegelungsstellung zu bringen, kann z.B. das Zungenende betätigt werden. Besonders vorzugsweise ist das Rastelement über ein Gelenk, das an der Zungenwurzel angeordnet ist, mit dem Anschlussstutzen verbunden.

Erfindungsgemäß ist vorzugsweise vorgesehen, dass der Anschlussstutzen durch einen Rasthaken des Rastelements an der Saugöffnung fixierbar ist. Zum Herstellen einer sicheren Verbindung kann der Rasthaken in eine korrespondierende Rastfläche, die sich z.B. an einer Rastnut, einem Raststeg oder einer Raststufe der Saugöffnung befindet, eingreifen. Durch den Rasthaken und die korrespondierende Rastfläche kann der Anschlussstutzen sicher in der Saugöffnung gehalten werden.

Die vorliegende Erfindung ermöglicht mit einfachen konstruktiven und kostengünstigen Mitteln die Bereitstellung eines Anschlussstutzens, der eine zuverlässiger in einer Saugöffnung fixiert werden kann. Insbesondere kann der Anschlussstutzen aufgrund einer vereinfachten Konstruktion leicht herstellbar sein.

### Kurzbeschreibung der Zeichnungen

Weitere vorteilhafte Ausgestaltungen werden nachfolgend an Hand eines in den Zeichnungen dargestellten Ausführungsbeispiels, auf welches die Erfindung jedoch nicht beschränkt ist, näher beschrieben.

Es zeigen schematisch:
- Fig. 1: einen Anschlussstutzen mit einem Saugschlauch in einer perspektivischen Darstellung;
und schließlich
- Fig. 2: einen Anschlussstutzen mit einem Saugschlauch in einer Seitenansicht.

### Ausführliche Beschreibung anhand von einem Ausführungsbeispiel

Bei der nachfolgenden Beschreibung von einer bevorzugten Ausführungsform der vorliegenden Erfindung bezeichnen gleiche Bezugszeichen gleiche oder vergleichbare Komponenten.

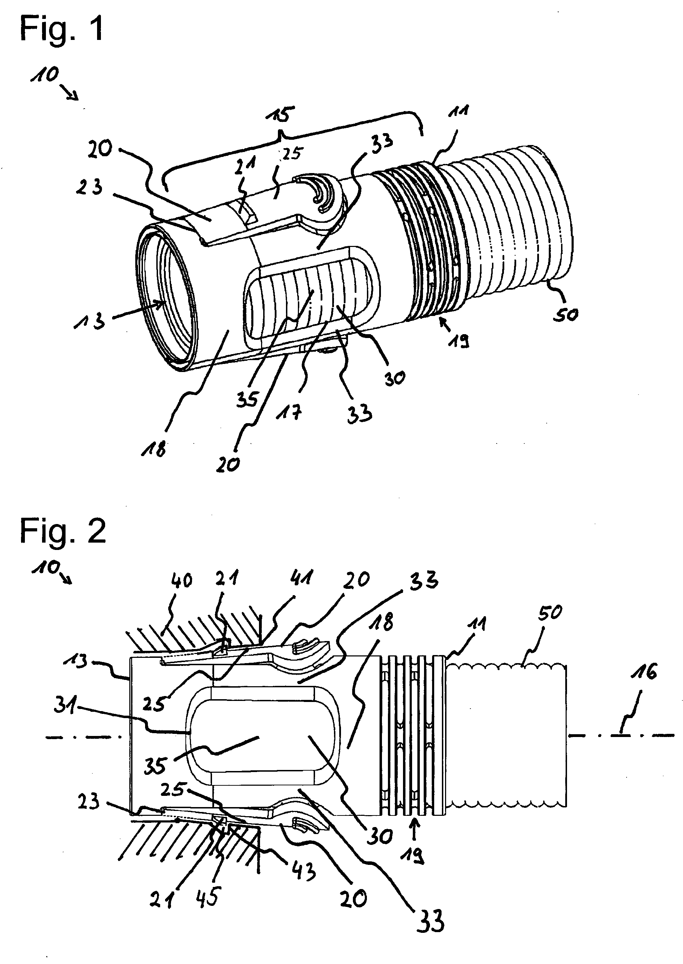

In Fig. 1 ist ein Anschlussstutzen 10 für einen Staubsauger mit einem Saugschlauch 50 in einer perspektivischen Darstellung gezeigt. Fig. 2 zeigt den Anschlussstutzen 10 in einer Seitenansicht. Der Anschlussstutzen 10 kann mit einer Saugöffnung 41 eines Staubsaugerteils 40, die in Fig. 2 skizziert ist, verbunden werden, um eine Fluidverbindung für einen Saugluftstrom zwischen dem Saugschlauch 50 und der Saugöffnung 41 des Staubsaugerteils 40, das ein Staubsaugergehäuse ist, herzustellen. Hierzu sind an dem Anschlussstutzen 10 eine erste 11 und eine zweite Öffnung 13 ausgebildet. Das Ende des Anschlussstutzens 10 mit der zweiten Öffnung 13 ist wie in Fig. 2 gezeigt in die Saugöffnung 41 des Staubsaugerteils 40 eingeführt, so dass über die zweite Öffnung 13 eine Fluidverbindung zu dem Staubsaugerteil 40 hergestellt werden kann. Der Anschlussstutzen 10 ist mit dem Saugschlauch 50 verbunden, wobei der Saugschlauch 50 durch die erste Öffnung 11 in den Anschlussstutzen 10 eingeführt ist und mit diesem durch eine Klebeverbindung verbunden ist. Über die erste Öffnung 11 kann also eine Fluidverbindung für Saugluft zu dem Saugschlauch 50 hergestellt werden. An der Seite der ersten Öffnung weist der Anschlussstutzen 10 einen flexiblen Abschnitt 19 auf. Der flexible Abschnitt 19 ist durch Schlitze und Stege gebildet, sodass der Anschlussstutzen 10 im Bereich des flexiblen Abschnitts 19 verformt werden kann. Hierdurch kann verhindert werden, dass der Saugschlauch 50 während der Benutzung an dem Anschlussstutzen 10 abknickt.

Ein Abschnitt 15 des Anschlussstutzens 10 ist zylinderförmig ausgebildet, an dem zwei radial gegenüberliegende zungenförmige Rastelemente 20 angeordnet sind. Eine Stutzenachse 16 des Anschlussstutzens 10 entspricht der Zylinderachse des zylinderförmigen Abschnitts 15. Der Saugschlauch 50 erstreckt sich über den zylinderförmigen Abschnitt 15, und liegt dabei an einer Innenfläche 17 des Anschlussstutzens 10 an. Die beiden Rastelemente 20 können jeweils in eine Verriegelungsstellung, in welcher der Anschlussstutzen 10 durch die Rastelemente 20 an der Saugöffnung 41 fixierbar ist, und in eine Entriegelungsstellung, in welcher der Anschlussstutzen 10 von der Saugöffnung 41 lösbar ist, gebracht werden. Die beiden zungenförmig ausgebildeten Rastelemente 20 sind einstückig an den Anschlussstutzen 10 angeformt und über ein als Filmscharnier ausgebildetes Gelenk 23 an ihrer Zungenwurzel mit dem Anschlussstutzen 10 verbunden. In den Fig. 1 und 2 sind die Rastelemente 20 aus Darstellungsgründen jeweils nur in der Verriegelungsstellung gezeigt.

An den Rastelementen 20 ist jeweils ein Rasthaken 21 einstückig angeformt, durch die der Anschlussstutzen 10 sicher an der Saugöffnung 41 fixierbar ist. Hierzu greift der Rasthaken 21 in der Verriegelungsstellung in eine korrespondierende Rastfläche 43, die sich an einer Rastnut 45 befindet, ein. In der Entriegelungsstellung, die in den Figuren nicht gezeigt ist, hat der Rasthaken 21 die Rastnut 45 verlassen, so dass der Anschlussstutzen 10 aus der Saugöffnung 41 entfernt werden kann.

In der Verriegelungsstellung bilden die Rastelemente 20 ebenfalls einen Teil der Innenfläche 17 des Anschlussstutzens 10, an der der Saugschlauch 50 anliegt. Werden nun die Rastelemente 20 radial nach innen bewegt, um in die Entriegelungsstellung gebracht zu werden, wird der Saugschlauch 50 verformt, und übt dadurch eine Rückstellkraft aus. Die Rastelemente 20 sind also so an dem Anschlussstutzen 10 angeordnet, dass diese den Saugschlauch 50 in der Entriegelungsstellung verformen können. Diese Rückstellkraft des Saugschlauchs 50 wirkt der Kraft entgegen, durch die die Rastelemente 20 in die Entriegelungsstellung gebracht wurden. Durch die Rückstellkraft können die Rastelemente 20 dann wieder zurück in die Verriegelungsstellung gebracht werden, wenn keine Kräfte auf die Rastelemente 20 einwirken, deren resultierende, der Rückstellkraft entgegenwirkende Kraft geringer ist, als die Rückstellkraft selbst. Durch die Rückstellkraft des Saugschlauchs 50 kann also sichergestellt werden, dass sich die Rastelemente 20 im bestimmungsgemäßen Betrieb des Staubsaugers oder nach dem Einsetzen des Anschlussstutzens 10 in die Saugöffnung 41 in der Verriegelungsstellung befinden und den Anschlussstutzen 10 in der Saugöffnung 41 sichern.

Da der Saugschlauch 50 an der Innenfläche 17 des Anschlussstutzens 10 anliegt und die Rastelemente 20 in der Verriegelungsstellung einen Teil der Innenfläche 17 bilden, können die Rastelemente 20 durch den Saugschlauch 50 nicht über die Verriegelungsstellung hinaus bewegt werden. Der Saugschlauch 50 kann nämlich nur eine Rückstellkraft ausüben, wenn die Rastelemente 20 von der Verriegelungsstellung in Richtung der nach radial innen orientierten Entriegelungsstellung gebracht wurden.

An dem Anschlussstutzen 10 sind weiter zwei radial gegenüberliegende Ausweichfenster 30 ausgebildet, die jeweils einen geschlossenen Umfangsrand 31 aufweisen. Der Anschlussstutzen 10 endet also nicht mit dem Ausweichfenster 30, sondern erstreckt sich über das Ausweichfenster 30 hinaus, so dass das die Fläche des Ausweichfensters 30 von dem Anschlussstutzen 10 begrenzt wird. Dadurch, dass sich der Anschlussstutzen 10 über die Ausweichfenster 30 hinaus erstreckt und zudem einen flexiblen Abschnitt 19 aufweist, kann ein Abknicken des Saugschlauchs 50 innerhalb des Anschlussstutzens 10, insbesondere in dem Bereich der Ausweichfenster 30, vermieden werden. Hierdurch wird sichergestellt, dass der Saugschlauch 50 die Rastelemente 20 durch seine Rückstellkraft in die Verriegelungsstellung bringen kann. Der Saugschlauch 50 befindet sich nämlich jederzeit radial zwischen den beiden Rastelementen 20 und kann aufgrund der Führung durch den zylinderförmigen Abschnitt 15 des Anschlussstutzens 10 nicht ausweichen. Wird der Saugschlauch 50 durch die Rastelemente 20 in der Entriegelungsstellung verformt, kann der Saugschlauch 50 seitlich durch die Ausweichfenster 30 gedrückt werden, so dass der Saugschlauch 50 in der Entriegelungsstellung der Rastelemente 20 durch die Ausweichfenster 30 ausweichen kann. Hierdurch wird der Saugschlauch 50 weniger stark elastisch verformt und bleibt dadurch länger haltbar.

Die Ausweichfenster 30 sind an einer Mantelwand 18 des Anschlussstutzens 10 radial gegenüberliegend angeordnet und befinden sich in axialer Richtung des Anschlussstutzens 10 auf der gleichen Höhe mit den beiden Rastelementen 20. Die Ausweichfenster 30 und die Rastelemente 20 überlappen sich also in axialer Richtung des Anschlussstutzens 10, wobei die maximale Erstreckung der Ausweichfenster 30 in axialer Richtung etwa 90 % der maximalen Erstreckung der Rastelemente 20 entspricht, und damit der maximalen Erstreckung der Rastelemente 20 im Sinne der vorliegenden Erfindung entspricht.

Bezüglich des Querschnitts des Anschlussstutzens 10 senkrecht zur Stutzenachse 16 erstrecken sich die Ausweichfenster 30 und die Rastelemente 20 jeweils über einen Winkelbereich von etwa 85°, wodurch ein Teil des Rands 31 der Ausweichfenster 30, nämlich der Teil des Rands 31, der sich in axialer Richtung des Anschlussstutzens 10 erstreckt, an die Rastelemente 20 angrenzt. Hierbei zwischen den Rastelementen 20 und den Ausweichfenstern 30 ein Steg 33, dessen Breite geringer ist als dessen Erstreckung in axialer Richtung, also entlang der Ausweichfenster 30 und der Rastelemente 20.

Außerdem sind die Flächenschwerpunkte 35 der Ausweichfenster 30 bezüglich eines axialen Querschnitts jeweils um 90° zu den Flächenschwerpunkten 25 der Rastelemente 20 versetzt. Bei dem axialen Querschnitt ist die Querschnittsfläche senkrecht zu Erstreckungsrichtung des Anschlussstutzens 10 orientiert und steht somit senkrecht auf der Stutzenachse 16. Die Ausweichfenster 30 und die Rastelemente 20 sind also so angeordnet, dass auf der Stutzenachse 16 senkrecht stehende Strecken, die von der Stutzenachse jeweils zu den Flächenschwerpunkten 25 und zu den Flächenschwerpunkten 35 führen, bei einer Projektion auf eine Fläche, die senkrecht auf der Stutzenachse 16 steht, einen rechten Winkel zueinander bilden. Aus Darstellungsgründen ist ein axialer Querschnitt in den Figuren nicht gezeigt.

Die vorliegende Erfindung ermöglicht mit einfachen konstruktiven und kostengünstigen Mitteln die Bereitstellung eines Anschlussstutzens, der eine zuverlässiger in einer Saugöffnung fixiert werden kann. Insbesondere kann der Anschlussstutzen aufgrund einer vereinfachten Konstruktion leicht herstellbar sein.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 10: Anschlussstutzen
- 11: erste Öffnung
- 13: zweite Öffnung
- 15: zylinderförmiger Abschnitt
- 16: Stutzenachse
- 17: Innenfläche
- 18: Mantelwand
- 19: flexibler Abschnitt
- 20: Rastelement
- 21: Rasthaken
- 23: Gelenk
- 25: Flächenschwerpunkt
- 30: Ausweichfenster
- 31: Umfangsrand
- 33: Steg
- 35: Flächenschwerpunkt
- 40: Staubsaugerteil
- 41: Saugöffnung
- 43: Rastfläche
- 45: Rastnut
- 50: Saugschlauch

## Patentansprüche

1. Anschlussstutzen (10) für einen Staubsauger, wobei der Anschlussstutzen (10) mit einer Saugöffnung (41) eines Staubsaugerteils (40) und einem Saugschlauch (50) verbindbar ist, und an dem Anschlussstutzen (10) ein Rastelement (20) angeordnet ist, das in eine Verriegelungsstellung, in welcher der Anschlussstutzen (10) durch das Rastelement (20) an der Saugöffnung (41) fixierbar ist, und in eine Entriegelungsstellung, in welcher der Anschlussstutzen (10) von der Saugöffnung (41) lösbar ist, gebracht werden kann, und das Rastelement (20) so an dem Anschlussstutzen (10) angeordnet ist, dass es den Saugschlauch (50) in der Entriegelungsstellung verformen kann, **dadurch gekennzeichnet, dass** an dem Anschlussstutzen (10) ein Ausweichfenster (30) ausgebildet ist, um ein Ausweichen des Saugschlauchs (50) in der Entriegelungsstellung des Rastelements (20) zu ermöglichen.

2. Anschlussstutzen (10) nach Anspruch 1, **dadurch gekennzeichnet, dass** Rastelement (20) und Ausweichfenster (30) sich in axialer Richtung des Anschlussstutzens (10) zumindest teilweise überlappen.

3. Anschlussstutzen (10) nach Anspruch 1 oder 2, **dadurch gekennzeichnet, dass** die maximale Erstreckung des Ausweichfensters (30) in axialer Richtung der maximalen Erstreckung des Rastelements (20) in axialer Richtung entspricht.

4. Anschlussstutzen (10) nach einem der vorherigen Ansprüche, **dadurch gekennzeichnet, dass** das Ausweichfenster (30) an einer Mantelwand (18) des Anschlussstutzens (10) angeordnet ist.

5. Anschlussstutzen (10) nach einem der vorherigen Ansprüche, **dadurch gekennzeichnet, dass** der Anschlussstutzen (10) zumindest teilweise zylinderförmig ausgebildet ist.

6. Anschlussstutzen (10) nach einem der vorherigen Ansprüche, **dadurch gekennzeichnet, dass** ein Teil des Rands (31) des Ausweichfensters (30) an das Rastelement (20) angrenzt.

7. Anschlussstutzen (10) nach einem der vorherigen Ansprüche, **dadurch gekennzeichnet, dass** das Rastelement (20) über ein Gelenk (23) mit dem Anschlussstutzen (10) verbunden ist.

8. Anschlussstutzen (10) nach einem der vorherigen Ansprüche, **dadurch gekennzeichnet, dass** das Rastelement (20) einstückig an den Anschlussstutzen (10) angeformt ist.

9. Anschlussstutzen (10) nach einem der vorherigen Ansprüche, **dadurch gekennzeichnet, dass** das Rastelement (20) zungenförmig ausgebildet ist.

10. Anschlussstutzen (10) nach einem der vorherigen Ansprüche, **dadurch gekennzeichnet, dass** der Anschlussstutzen (10) durch einen Rasthaken (21) des Rastelements (20) an der Saugöffnung (41) fixierbar ist.

## Claims

1. Connecting pipe (10) for a suction cleaner, wherein the connecting pipe (10) is able to be connected to a suction opening (41) of a suction cleaner part (40) and a suction hose (50), and a latching element (20) is disposed on the connecting pipe (10) which can be brought into a locking position, in which the connecting pipe (10) is able to be fixed by the latching element (20) to the suction opening (41), and into an unlocking position, in which the connecting pipe (10) is able to be released from the suction opening (41), and the latching element (20) is disposed on the connecting pipe (10) such that it can deform the suction hose (50) in the unlocking position, **characterised in that** a deflection window (30) is embodied on the connecting pipe (10), in order to make it possible for the suction hose (50) to deflect in the unlocking position of the latching element (20).

2. Connecting pipe (10) according to claim 1, **characterised in that** latching element (20) and deflection window (30) overlap at least partly in the axial direction of the connecting pipe (10).

3. Connecting pipe (10) according to claim 1 or 2, **characterised in that** the maximum extent of the deflection window (30) in the axial direction corresponds to the maximum extent of the latching element (20) in the axial direction.

4. Connecting pipe (10) according to one of the preceding claims, **characterised in that** the deflection window (30) is disposed on an outer wall (18) of the connecting pipe (10).

5. Connecting pipe (10) according to one of the preceding claims, **characterised in that** the connecting pipe (10) is embodied at least partly cylindrical in shape.

6. Connecting pipe (10) according to one of the preceding claims, **characterised in that** a part of the edge (31) of the deflection window (30) adjoins the latching element (20).

7. Connecting pipe (10) according to one of the preceding claims, **characterised in that** the latching element (20) is connected to the connecting pipe (10) via a joint (23).

8. Connecting pipe (10) according to one of the preceding claims, **characterised in that** the latching element (20) is moulded in one piece on the connecting pipe (10).

9. Connecting pipe (10) according to one of the preceding claims, **characterised in that** the latching element (20) is embodied in the shape of a tongue.

10. Connecting pipe (10) according to one of the preceding claims, **characterised in that** the connecting pipe (10) is able to be fixed to the suction opening (41) by a latching hook (21) of the latching element (20).

## Revendications

1. Tubulure de raccordement (10) pour un aspirateur, la tubulure de raccordement (10) étant raccordable à une ouverture d'aspiration (41) d'une partie d'aspirateur (40) et à un tuyau d'aspiration (50), et un élément d'encliquetage (20) étant disposé sur la tubulure de raccordement (10), lequel peut être mis dans une position de verrouillage, dans laquelle la tubulure de raccordement (10) est fixable sur l'ouverture d'aspiration (41) au moyen de l'élément d'encliquetage (20), et dans une position de déverrouillage, dans laquelle la tubulure de raccordement (10) est détachable de l'ouverture d'aspiration (41), et l'élément d'encliquetage (20) étant disposé de telle manière sur la tubulure de raccordement (10) qu'il puisse déformer le tuyau d'aspiration (50) en position de déverrouillage, **caractérisée en ce qu'**une fenêtre de dégagement (30) est formée sur la tubulure de raccordement (10) afin de permettre un dégagement du tuyau d'aspiration (50) en position de déverrouillage de l'élément d'encliquetage (20).

2. Tubulure de raccordement (10) selon la revendication 1, **caractérisée en ce que** l'élément d'encliquetage (20) et la fenêtre de dégagement (30) se chevauchent au moins en partie en direction axiale de la tubulure de raccordement (10).

3. Tubulure de raccordement (10) selon la revendication 1 ou 2, **caractérisée en ce que** l'étendue maximale de la fenêtre de dégagement (30) en direction axiale correspond à l'étendue maximale de l'élément d'encliquetage (20) en direction axiale.

4. Tubulure de raccordement (10) selon l'une quelconque des revendications précédentes, **caractérisée en ce que** la fenêtre de dégagement (30) est disposée sur une paroi d'enveloppe (18) de la tubulure de raccordement (10).

5. Tubulure de raccordement (10) selon l'une quelconque des revendications précédentes, **caractérisée en ce que** la tubulure de raccordement (10) est réalisée au moins en partie de forme cylindrique.

6. Tubulure de raccordement (10) selon l'une quelconque des revendications précédentes, **caractérisée en ce qu'**une partie du bord (31) de la fenêtre de dégagement (30) est adjacente à l'élément d'encliquetage (20).

7. Tubulure de raccordement (10) selon l'une quelconque des revendications précédentes, **caractérisée en ce que** l'élément d'encliquetage (20) est relié à la tubulure de raccordement (10) par l'intermédiaire d'une articulation (23).

8. Tubulure de raccordement (10) selon l'une quelconque des revendications précédentes, **caractérisée en ce que** l'élément d'encliquetage (20) est formé d'une seule pièce sur la tubulure de raccordement (10).

9. Tubulure de raccordement (10) selon l'une quelconque des revendications précédentes, **caractérisée en ce que** l'élément d'encliquetage (20) est réalisé en forme de languette.

10. Tubulure de raccordement (10) selon l'une quelconque des revendications précédentes, **caractérisée en ce que** la tubulure de raccordement (10) est fixable sur l'ouverture d'aspiration (41) au moyen d'un crochet d'encliquetage (21) de l'élément d'encliquetage (20).
